# FASCICULE DE BREVET EUROPEEN

(11) **EP 3 233 587 B1**
(45) Date de publication et mention de la délivrance du brevet: **18.09.2019**
(21) Numéro de dépôt: 15801863.0
(22) Date de dépôt: 30.11.2015
(51) Int. Cl.: B60R 25/021

(54) **DISPOSITIF ANTIVOL POUR COLONNE DE DIRECTION**
DIEBSTAHLSCHUTZVORRICHTUNG FÜR LENKSÄULE
ANTITHEFT DEVICE FOR STEERING COLUMN

(30) Priorité: 18.12.2014 FR 1462840
(43) Date de publication de la demande: 25.10.2017
(73) Titulaire: U-Shin France, 94000 Créteil (FR)
(72) Inventeur: POGGI, Patrice, 94046 Creteil Cedex (FR); DESARMENIEN, Alain, 94046 Creteil Cedex (FR)
(74) Mandataire: Verriest, Philippe
(86) Numéro de dépôt international: PCT/EP2015/078092
(87) Numéro de publication internationale: WO 2016/096389

(56) Documents cités:
- EP-A1- 2 679 453
- WO-A1-2012/049258
- WO-A1-2012/150188
- GB-A- 1 471 467
- GB-A- 2 042 621

## Description

La présente demande concerne un dispositif antivol pour colonne de direction, notamment d'un véhicule automobile.

Usuellement, un véhicule automobile comporte un dispositif de commande de démarrage sous la forme d'un verrou comportant un rotor et un stator. Ledit verrou permet le démarrage du véhicule automobile par la mise en rotation du rotor par un moyen d'entraînement, par exemple un insert de clé.

Le rotor est mobile dans le stator dans plusieurs positions angulaires pour lesquelles la colonne de direction est bloquée ou débloquée par un pêne.

Pour ce faire, le verrou est relié à un organe rotatif formant came disposé entre le stator et le rotor de sorte que la came puisse être entraînée en rotation avec le rotor. La came commande alors le mouvement du pêne. Ce dernier peut prendre deux positions : une positions de blocage dans laquelle le pêne est reçu dans un logement de la colonne de direction bloquant tout mouvement de cette dernière et une position de déblocage dans laquelle le pêne est à distance de la colonne de direction autorisant tout mouvement de cette dernière.

Lorsqu'un utilisateur a réalisé une première rotation de la clef pour déverrouiller la colonne de direction, la réglementation demande que le pêne soit retenu en position de déblocage tant que la clef n'est pas totalement ou partiellement retirée du dispositif antivol de manière volontaire.

Il est connu d'utiliser un système d'accroche par levier dans lequel le maintien du pêne dans la position de déblocage de la colonne de direction, comme exigée par la réglementation, est assuré à l'aide d'une tirette commandé par un levier. Le levier coopère avec le rotor permettant la translation de la tirette qui vient maintenir ou au contraire se désengager du pêne.

Cependant, un tel système d'accroche présente une fragilité au niveau de la liaison entre le levier, la tirette et le pêne.

Il existe donc un besoin pour fournir un dispositif antivol pour colonne de direction, notamment d'un véhicule automobile, dont le maintien du pêne en position déblocage soit robuste, simple à mettre en oeuvre et efficace.

Le document WO3023/049258A1 décrit un dispositif antivol pour colonne de direction notamment de véhicule automobile, comprenant un verrou comprenant un rotor mobile en rotation autour d'un axe de rotation s'étendant selon son axe longitudinal et logé dans un stator fixe par rapport au rotor, ledit rotor comportant un logement apte çà recevoir un insert de clé, une came configurée pour être commandée par ledit rotor, un pêne entraîné par ladite came pour prendre une position de blocage de la colonne de direction et une position de déblocage de cette dernière, et un dispositif de maintien du pêne étant configuré pour détecter la présence de l'insert de clé dans le logement par un mouvement entre une position de maintien du pêne dans la position de déblocage lorsque l'insert de clé est dans le logement et une position d'attente dans laquelle le dispositif de maintien est à distance du pêne lorsque l'insert de clé n'est pas dans le logement.

De tels dispositifs antivol sont particulièrement adaptés lorsque les axes de rotation du rotor et de l'arbre à cames sont confondus et lorsque le pêne a un axe de translation parallèle ou perpendiculaire l'arbre à cames. Néanmoins, les constructeurs automobiles peuvent être amenés à développer où requérir, selon leurs besoins et contraintes de productions, des dispositifs antivol ayant une forme générale en « Y », c'est-à-dire où le rotor et l'arbre à cames ont des axes de rotation se croisant et où l'axe de translation du pêne passe par ce croisement, chacun de ces éléments formant une branche du « Y ». Il est donc important d'adapter les moyens de transmission et transformation des mouvements de rotation du rotor, et par extension de l'arbre à cames, en mouvement de translation du pêne à cette conformation en « Y » du dispositif antivol.

A cet effet, selon un premier aspect, l'invention a pour objet un dispositif antivol pour colonne de direction notamment de véhicule automobile, comprenant :
- un verrou comprenant un rotor mobile en rotation autour d'un axe de rotation s'étendant selon son axe longitudinal et logé dans un stator fixe par rapport au rotor, ledit rotor comportant un logement apte çà recevoir un insert de clé,
- une came configurée pour être commandée par ledit rotor,
- un pêne entraîné par ladite came pour prendre une position de blocage de la colonne de direction et une position de déblocage de cette dernière,
- un dispositif de maintien du pêne étant configuré pour détecter la présence de l'insert de clé dans le logement par un mouvement entre une position de maintien du pêne dans la position de déblocage lorsque l'insert de clé est dans le logement et une position d'attente dans laquelle le dispositif de maintien est à distance du pêne lorsque l'insert de clé n'est pas dans le logement, et
   les axes longitudinaux du pêne, de la came et du rotor sont coplanaires et non colinéaires.

Grâce à l'invention, le pêne est maintenu en position de déblocage avec une unique pièce le dispositif de maintien qui coopère directement avec le rotor du verrou. En particulier, ledit dispositif est capable d'être activé et désactivé en fonction de la présence ou de l'absence de l'insert de clé dans le rotor.

Le maintien du pêne en position de déblocage est donc plus robuste et plus simple à mettre en oeuvre, du fait de la diminution du nombre d'éléments dans la cinématique, tout en restant très efficace.

L'invention peut également comprendre l'une quelconque des caractéristiques suivantes prises seules ou selon toutes les combinaisons possibles :
- le dispositif de maintien comporte une extrémité de maintien configurée pour bloquer le pêne en position de déblocage et une extrémité de contact configurée pour détecter la présence de l'insert de clé ; et/ou
- le verrou comporte un dispositif intermédiaire de détection de la présence d'un insert de clé dans le logement et coopérant avec l'extrémité de contact afin d'entraîner le dispositif de maintien dans disposé dans la position de maintien et la position d'attente ; et/ou
- le dispositif intermédiaire de détection est associé à un moyen de retour élastique ; et/ou
- le pêne et l'extrémité de maintien du dispositif de blocage sont en contact lors du passage du pêne de la position de blocage à la position de déblocage ; et/ou
- l'extrémité du pêne en regard de l'extrémité de maintien comporte une rampe sur laquelle vient en appui l'extrémité de maintien lorsque le pêne passe de la position de blocage à la position de déblocage ; et/ou
- l'extrémité du pêne en regard de l'extrémité de maintien comporte une cavité apte à recevoir l'extrémité de maintien ; et/ou
- l'extrémité de contact présente une forme de crochet destiné à venir dans une cavité du verrou en position d'attente, ladite cavité étant en regard du logement de l'insert de clé ; et/ou
- l'extrémité de contact est configurée pour venir en position d'attente dans la cavité du verrou ; et/ou
- au moins une partie du dispositif intermédiaire de détection est reçue dans la cavité du verrou.

La présente invention concerne également un véhicule automobile, comportant un dispositif antivol de l'invention.

L'invention sera davantage comprise à la lumière de la description non limitative qui va suivre et faite en référence des dessins :
- la figure 1 est une vue en perspective éclatée de côté d'un mode de réalisation d'un dispositif antivol de l'invention,
- les figures 2 à 7 sont des vues en perspective de côté du mode de réalisation de la figure 1 en fonctionnement,
- la figure 8 est une variante du mode de réalisation de la figure 2 dans lequel le moyen de retour élastique associé au pêne est un ressort en compression.

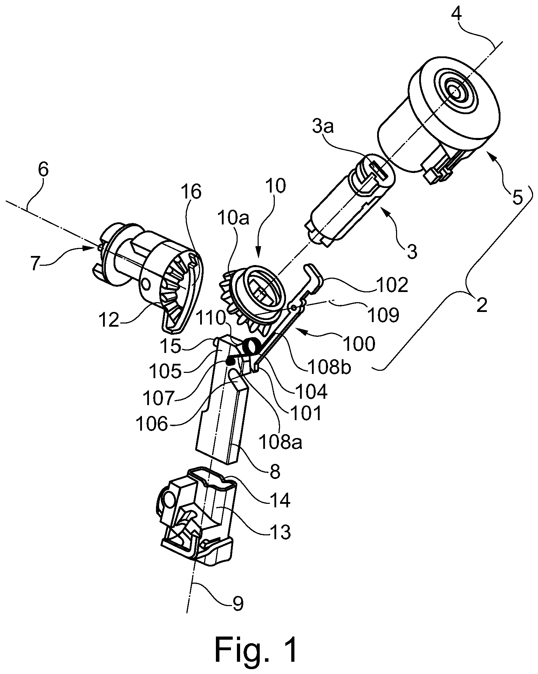

Comme représenté sur la figure 1, le dispositif antivol 1 de l'invention comprend :
- un verrou 2 comprenant :
   - un rotor 3 destiné à permettre le démarrage du véhicule automobile, ledit rotor 3 s'étendant suivant un axe 4 sensiblement longitudinal et étant monté mobile en rotation selon ledit axe longitudinal 4 ; ledit rotor comportant un logement (non représenté) apte à recevoir un insert de clé (non représenté),
   - un stator 5 destiné à recevoir le rotor 3 et à rester fixe par rapport audit rotor 3, et
- une came 7 apte à déverrouiller la colonne de direction (non représentée), ladite came 7 étant configurée de sorte à être entraîné en rotation avec le rotor 3 suivant l'axe longitudinal 6.
- un pêne 8 entraîné par ladite came 7 pour prendre une position de blocage de la colonne de direction et une position de déblocage de cette dernière, le pêne s'étend suivant un axe longitudinal 9.

Le rotor 3 est ainsi de forme sensiblement allongé selon l'axe longitudinal 4. Ainsi, le rotor 3 peut être de forme sensiblement cylindrique. Selon le mode de réalisation représenté sur les figures, le rotor 3 comporte une ouverture 3a débouchant dans un logement (non représenté) apte à recevoir le moyen d'entraînement (non représenté), tel qu'un insert de clé actionnable par un utilisateur. L'insert de clé peut comporter typiquement une ou plusieurs pistes aptes à déplacer des paillettes (non représentées) disposées longitudinalement dans des ouvertures 3b prévues à cet effet dans le rotor 3 selon l'axe longitudinal 4 de ce dernier. Les paillettes permettent d'empêcher l'introduction d'un insert de clé ne correspondant pas à la combinaison des paillettes du rotor 3 et d'empêcher également la mise en rotation du rotor 3.

Le stator 5 comporte un logement de forme sensiblement allongé apte à recevoir ledit rotor 3. Le stator 5 est typiquement immobile par rapport au rotor 3.

La came 7 mobile en rotation selon l'axe longitudinal 8 est apte à être entraînée en rotation par le rotor 3. Selon le mode de réalisation représenté sur les figures, un moyen d'engrenage 10, tel qu'un pignon, peut être intercalé entre la came 7 et l'extrémité du rotor 3. Le pignon 10 comporte typiquement une denture 10a apte à venir coopérer avec une denture 11 présente sur l'extrémité 12 de la came.

L'organe rotatif 7 peut être une came de toute forme, notamment sensiblement cylindrique.

Le pêne 8 est entraîné par ladite came 7 pour prendre une position de blocage de la colonne de direction et une position de déblocage de cette dernière. Le pêne s'étend suivant un axe longitudinal 9 et est reçu dans le logement 14 d'un boîtier 13 destiné à protéger le mouvement du pêne.

Typiquement, le pêne 8 a un mouvement de translation suivant l'axe longitudinal 9 afin de venir bloquer et débloquer la colonne de direction. La colonne de direction peut ainsi comporter un ou plusieurs logements aptes à recevoir l'extrémité du pêne 8.

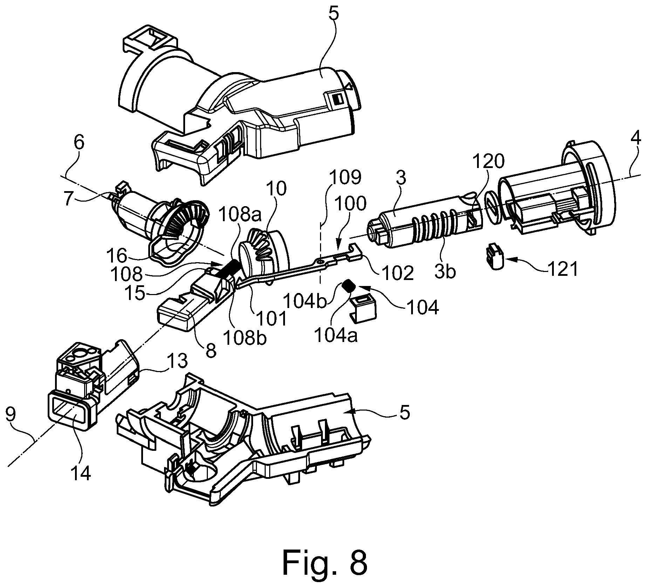

Le pêne 8 est associé à un moyen de retour élastique 108, notamment un ressort en compression (voir figure 8) ou un ressort en torsion tel qu'un ressort en spiral (voir figures 1 à 7). Le moyen de retour élastique comporte une extrémité 108a fixée sur une le stator et une extrémité 108b fixée contre le pêne 8.

Dans le cas d'un ressort en torsion, l'extrémité libre 108a est configurée pour venir se mettre en compression sous un plot 107 du pêne distinct du plot 15 s'engageant sur le profil de came 16
Dans le cas d'un ressort en compression, l'extrémité libre 108a est configurée pour venir se mettre directement contre la face du pêne 8.

La came 7 entraîne le pêne 8 par l'intermédiaire d'un plot 15 disposé sur la surface du pêne 8 en regard de la came 7 qui est capable de suivre le profil de la came 7. Ainsi lorsque le verrou 2 est déverrouillé soit par la rotation de l'insert de clé conforme introduit dans le logement du rotor 4, le pêne 8 libère la mobilité de la colonne de direction permettant à l'utilisateur de pouvoir agir sur les roues du véhicule automobile.

Comme visible sur la figure 1, les axes longitudinaux 9, 6 et 4, respectivement, du pêne 8, de la came 7 et du rotor 3 sont coplanaires et non colinéaires.

La came 7 présente un profil de came 16 non circulaire afin de permettre la translation du pêne 8 entre la position de blocage et la position de déblocage de la colonne de direction.

Le dispositif 1 de l'invention comprend également un dispositif de maintien 100 du pêne configuré pour détecter la présence de l'insert de clé dans le logement par un mouvement entre une position de maintien du pêne 8 dans la position de déblocage lorsque l'insert de clé est dans le logement et une position d'attente dans laquelle le dispositif de maintien est à distance du pêne 8 lorsque l'insert de clé n'est pas dans le logement.

Le dispositif de maintien 100 comporte une extrémité de maintien 101 configurée pour bloquer le pêne 8 en position de déblocage et une extrémité de contact 102 configurée pour détecter la présence de l'insert de clé.

Le dispositif de maintien 100 est mobile en rotation selon un axe 109 sensiblement perpendiculaire à l'axe longitudinal 4 du verrou. Le dispositif de maintien détectant un insert de clé soit directement par l'extrémité de contact soit indirectement, se met à pivoter autour de l'axe de rotation dudit moyen de maintien 100.

Le verrou 2 comporte un dispositif intermédiaire de détection 121 de la présence d'un insert de clé dans le logement et coopérant avec l'extrémité de contact 102 afin d'entraîner le dispositif de maintien 100 dans disposé dans la position de maintien et la position d'attente.

Le dispositif de maintien 100 est associé à un moyen de retour élastique 104, notamment un ressort en compression. Le moyen de retour élastique comporte une extrémité 104a fixée à une partie fixe du dispositif antivol de l'invention et une extrémité 104b fixée sur le dispositif de maintien 100.

Le pêne 8 et l'extrémité de maintien 101 du dispositif de blocage sont en contact lors du passage du pêne 8 de la position de blocage à la position de déblocage.

L'extrémité du pêne 105 en regard de l'extrémité de maintien 101 comporte une rampe 110 sur laquelle vient en appui l'extrémité de maintien lorsque le pêne passe de la position de blocage à la position de déblocage.

L'extrémité du pêne 105 en regard de l'extrémité de maintien 101 comporte une cavité 106 apte à recevoir l'extrémité de maintien 101.

L'extrémité de contact 101 présente une forme de crochet destiné à venir dans une cavité 120 du verrou en position d'attente, ladite cavité 120 étant en regard du logement de l'insert de clé.

L'extrémité de contact 102 est configurée pour venir en position d'attente dans la cavité 120 du verrou 2.

Au moins une partie du dispositif intermédiaire 121 de détection est reçu dans la cavité 120.

La cinématique en fonctionnement va être maintenant décrite plus en détail.

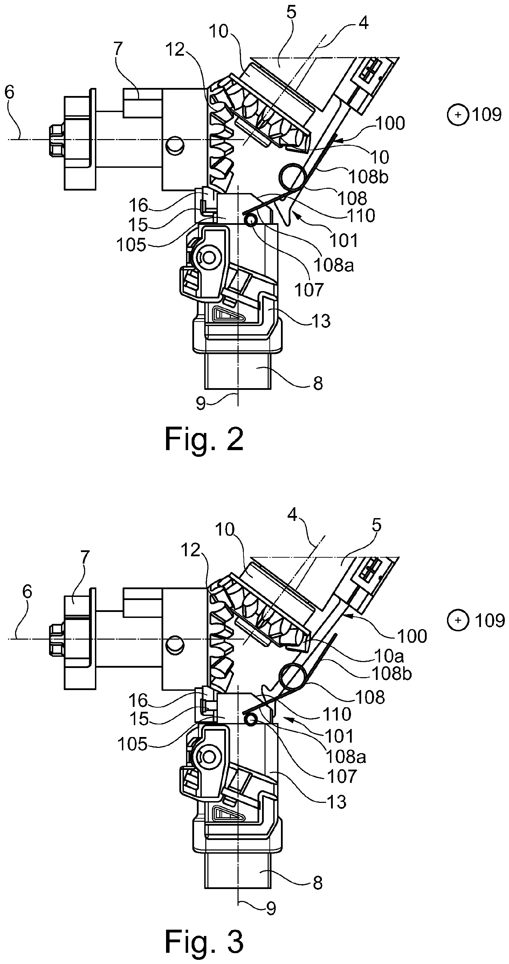

Comme représenté sur la figure 2, l'insert de clé n'est pas introduit dans le logement du rotor. Le pêne 8 est en position de blocage de la colonne de direction et le dispositif de maintien 100 est disposé à distance dudit pêne 8.

Comme représenté sur la figure 3, l'insert de clé est introduit dans le logement du verrou 2. Le dispositif de maintien 100 détecte alors la présence de la clé soit directement par l'extrémité de contact 102 traversant la cavité du verrou 2 ou bien par l'intermédiaire d'un dispositif intermédiaire 121. La détection du dispositif intermédiaire 121 se traduit par la sortie hors de la cavité 120 d'une partie dudit dispositif intermédiaire 121. Le dispositif de maintien 100 étant en appui sur ce dernier, le dispositif de maintien 100 pivote et rapproche l'extrémité de maintien 101 du pêne 8 qui vient se mettre en contact sur le profil du pêne, notamment sur la rampe 110.

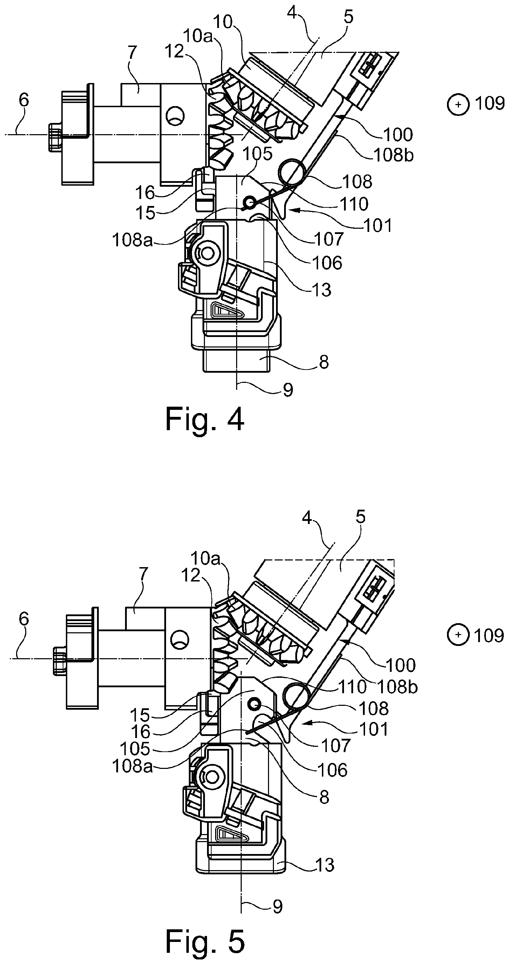

Comme représenté sur les figures 4 et 5, après la rotation de l'insert de clé dans le rotor 3, le rotor 3 se met en rotation autour de l'axe longitudinal 4 et entraine la came 7 en rotation via le pignon 10. Le plot 15 suit alors le profil de came 16 et le pêne 8 remonte de la position de déblocage à la position de blocage suivant son axe longitudinal 9. Le dispositif de maintien 100 suit le profil du pêne jusqu'à être à proximité de la cavité 106.

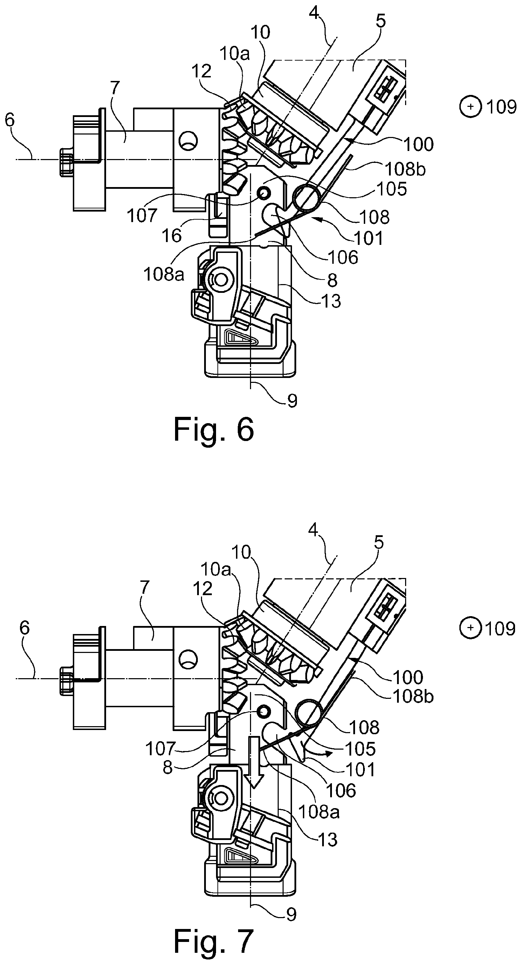

Comme représenté sur la figure 6, le pêne 8 est en haut de course dans sa position de déblocage et le dispositif de maintien 100 vient se loger dans la cavité 106.

Le pêne 8 est donc bloqué dans cette position.

Comme représenté sur la figure 7, l'insert de clé est retiré du logement, l'extrémité de contact 102 translate alors vers l'intérieur de la cavité du rotor 3 ce qui fait pivoter autour de son axe de rotation le dispositif de maintien 100. L'extrémité de maintien 101 est donc dégagée de la cavité 106. Le pêne 8 est libéré pour revenir en position de blocage.

## Revendications

1. Dispositif antivol (1) pour colonne de direction notamment de véhicule automobile, comprenant :
- un verrou (2) comprenant un rotor (3) mobile en rotation autour d'un axe de rotation (4) s'étendant selon son axe longitudinal et logé dans un stator (5) fixe par rapport au rotor (3), ledit rotor (3) comportant un logement apte çà recevoir un insert de clé,
- une came (7) configurée pour être commandée par ledit rotor (3),
- un pêne (8) entraîné par ladite came (7) pour prendre une position de blocage de la colonne de direction et une position de déblocage de cette dernière, et
- un dispositif de maintien (100) du pêne (8) étant configuré pour détecter la présence de l'insert de clé dans le logement par un mouvement entre une position de maintien du pêne (8) dans la position de déblocage lorsque l'insert de clé est dans le logement et une position d'attente dans laquelle le dispositif de maintien (100) est à distance du pêne (8) lorsque l'insert de clé n'est pas dans le logement,
dans lequel les axes longitudinaux (9, 6, 4) du pêne (8), de la came (7) et du rotor (2) sont coplanaires et non colinéaires.

2. Dispositif (1) selon la revendication 1, dans lequel le dispositif de maintien (100) comporte une extrémité de maintien (101) configurée pour bloquer le pêne (8) en position de déblocage et une extrémité de contact (102) configurée pour détecter la présence de l'insert de clé.

3. Dispositif (1) selon la revendication 1 ou 2, dans lequel le verrou (2) comporte un dispositif intermédiaire de détection (121) de la présence d'un insert de clé dans le logement et coopérant avec l'extrémité de contact (102) afin d'entraîner le dispositif de maintien (100) dans disposé dans la position de maintien et la position d'attente.

4. Dispositif (1) selon la revendication précédente, dans laquelle le dispositif intermédiaire de détection (121) est associé à un moyen de retour élastique.

5. Dispositif (1) selon l'une quelconque des revendications 2 à 4, dans lequel le pêne (8) et l'extrémité de maintien (101) du dispositif de blocage sont en contact lors du passage du pêne (8) de la position de blocage à la position de déblocage.

6. Dispositif (1) selon l'une quelconque des revendications 2 à 5, dans lequel l'extrémité (105) du pêne en regard de l'extrémité de maintien (101) comporte une rampe (110) sur laquelle vient en appui l'extrémité de maintien (101) lorsque le pêne (8) passe de la position de blocage à la position de déblocage.

7. Dispositif (1) selon l'une quelconque des revendications 2 à 6, dans lequel l'extrémité (105) du pêne en regard de l'extrémité de maintien (101) comporte une cavité (106) apte à recevoir l'extrémité de maintien (101).

8. Dispositif (1) selon l'une quelconque des revendications 2 à 7, dans lequel l'extrémité de contact (102) présente une forme de crochet destiné à venir dans une cavité du verrou (2) en position d'attente, ladite cavité étant en regard du logement de l'insert de clé.

9. Dispositif (1) selon l'une quelconque des revendications 2 à 8, dans lequel l'extrémité de contact (102) est configurée pour venir en position d'attente dans la cavité du verrou (2).

10. Dispositif (1) selon la revendication 4 prise avec les revendications 8 ou 9, dans lequel au moins une partie du dispositif intermédiaire de détection (121) est reçue dans la cavité (120) du verrou.

11. Véhicule automobile comportant une colonne de direction et un dispositif antivol (1) selon l'une quelconque des revendications précédentes.

## Patentansprüche

1. Diebstahlschutzvorrichtung (1) für Lenksäule, insbesondere für Kraftfahrzeug, die Folgendes umfasst:
- einen Riegel (2), der einen Rotor (3) umfasst, der in Drehung um eine Rotationsachse (4) beweglich ist, die sich entlang seiner Längsachse erstreckt und in einem Stator (5) aufgenommen ist, der bezüglich des Rotors (3) stationär ist, wobei der Rotor (3) eine Aufnahme umfasst, die geeignet ist, um einen Schlüsseleinsatz aufzunehmen,
- einen Nocken (7), der ausgelegt ist, um von dem Rotor (3) gesteuert zu werden,
- eine Klinke (8), die von dem Nocken (7) angetrieben wird, um eine Blockierungsposition der Lenksäule und eine Löseposition dieser Letzteren einzunehmen, und
- wobei eine Haltevorrichtung (100) der Klinke (8) ausgelegt ist, um die Anwesenheit des Schlüsseleinsatzes in der Aufnahme durch eine Bewegung zu erfassen zwischen einer Halteposition der Klinke (8) in der Löseposition, wenn der Schlüsseleinsatz in der Aufnahme ist, und einer Warteposition, in der die Haltevorrichtung (100) von der Klinke (8), wenn der Schlüsseleinsatz nicht in der Aufnahme ist, beabstandet ist,
wobei die Längsachsen (9, 6, 4) der Klinke (8) des Nockens (7) und des Rotors (3) koplanar und nicht kollinear sind.

2. Vorrichtung (1) nach Anspruch 1, wobei die Haltevorrichtung (100) ein Halteende (101) umfasst, das ausgelegt ist, um die Klinke (8) in Löseposition zu blockieren, und ein Kontaktende (102), das ausgelegt ist, um die Anwesenheit des Schlüsseleinsatzes zu erfassen.

3. Vorrichtung (1) nach Anspruch 1 oder 2, wobei der Riegel (2) eine Zwischenerfassungsvorrichtung (121) der Anwesenheit eines Schlüsseleinsatzes in der Aufnahme, und die mit dem Kontaktende (102) zusammenwirkt, um die Haltevorrichtung (100) in die Halteposition und in die Warteposition anzutreiben, umfasst.

4. Vorrichtung (1) nach dem vorstehenden Anspruch, wobei die Zwischenerfassungsvorrichtung (121) mit einem elastischen Rückkehrmittel assoziiert ist.

5. Vorrichtung (1) nach einem der Ansprüche 2 bis 4, wobei die Klinke (8) und das Halteende (101) der Blockierungsvorrichtung bei der Passage der Klinke (8) von der Blockierungsposition zu der Löseposition in Kontakt sind.

6. Vorrichtung (1) nach einem der Ansprüche 2 bis 5, wobei das Ende (105) der Klinke gegenüber dem Halteende (101) eine Rampe (110) umfasst, auf der das Halteende (101) zum Aufliegen kommt, wenn die Klinke (8) von der Blockierungsposition zu der Löseposition übergeht.

7. Vorrichtung (1) nach einem der Ansprüche 2 bis 6, wobei das Ende (105) der Klinke gegenüber dem Halteende (101) einen Hohlraum (106) umfasst, der geeignet ist, um das Halteende (101) aufzunehmen.

8. Vorrichtung (1) nach einem der Ansprüche 2 bis 7, wobei das Kontaktende (102) eine Hakenform aufweist, die dazu bestimmt ist, in einem Hohlraum des Riegels (2) in Warteposition zu kommen, wobei der Hohlraum der Schlüsseleinsatzaufnahme gegenüberliegt.

9. Vorrichtung (1) nach einem der Ansprüche 2 bis 8, wobei das Kontaktende (102) konfiguriert ist, um in dem Hohlraum des Riegels (2) in Warteposition zu kommen.

10. Vorrichtung (1) nach Anspruch 4, mit den Ansprüchen 8 oder 9 genommen, wobei mindestens ein Teil der Zwischenerfassungsvorrichtung (121) in dem Hohlraum (120) des Riegels aufgenommen ist.

11. Kraftfahrzeug, das eine Lenksäule und eine Diebstahlschutzvorrichtung (1) nach einem der vorstehenden Ansprüche umfasst.

## Claims

1. An antitheft device (1) for a steering column, in particular of a motor vehicle, comprising:
- a lock (2) comprising a rotor (3) movable in rotation about an axis of rotation (4) extending according to its longitudinal axis and housed within a stator (5) fixed relative to the rotor (3), said rotor (3) including a housing adapted to receive a key insert,
- a cam (7) configured to be controlled by said rotor (3),
- a bolt (8) driven by said cam (7) to take on a blocking position of the steering column and an unblocking position of the latter, and
- a device (100) for holding the bolt (8) being configured to detect the presence of the key insert in the housing by a movement between a holding position of the bolt (8) in the unblocking position when the key insert is in the housing and a standby position in which the holding device (100) is away from the bolt (8) when the key insert is not in the housing,
wherein the longitudinal axes (9, 6, 4) of the bolt (8), of the cam (7) and of the rotor (3) are coplanar and non-collinear.

2. The device (1) according to claim 1, wherein the holding device (100) includes a holding end (101) configured to block the bolt (8) in the unblocking position and a contact end (102) configured to detect the presence of the key insert.

3. The device (1) according to claim 1 or 2, wherein the lock (2) includes an intermediate device (121) for detecting the presence of a key insert in the housing and cooperating with the contact end (102) in order to drive the holding device (100) into the holding position and the standby position.

4. The device (1) according to the preceding claim, wherein the intermediate detection device (121) is associated with an elastic return means.

5. The device (1) according to any one of claims 2 to 4, wherein the bolt (8) and the holding end (101) of the blocking device are in contact during the passage of the bolt (8) from the blocking position to the unblocking position.

6. The device (1) according to any one of claims 2 to 5, wherein the end (105) of the bolt opposite the holding end (101) includes a ramp (110) on which the holding end (101) bears when the bolt (8) passes from the blocking position to the unblocking position.

7. The device (1) according to any one of claims 2 to 6, wherein the end (105) of the bolt opposite the holding end (101) includes a cavity (106) adapted to receive the holding end (101).

8. The device (1) according to any one of claims 2 to 7, wherein the contact end (102) has a hook shape intended to come into a cavity of the lock (2) in the standby position, said cavity being opposite the housing of the key insert.

9. The device (1) according to any one of claims 2 to 8, wherein the contact end (102) is configured to come into the standby position in the cavity of the lock (2).

10. The device (1) according to claim 4 considered together with claims 8 or 9, wherein at least one portion of the intermediate detection device (121) is received in the cavity (120) of the lock.

11. A motor vehicle including a steering column and an antitheft device (1) according to any one of the preceding claims.
